# EUROPÄISCHE PATENTSCHRIFT

(11) **EP 2 354 577 B1**
(45) Veröffentlichungstag und Bekanntmachung des Hinweises auf die Patenterteilung: **11.07.2018**
(21) Anmeldenummer: 11150440.3
(22) Anmeldetag: 10.01.2011
(51) Int. Cl.: F16C 19/50, F16C 33/58, F16D 65/14, F16C 41/04

(54) **Lagerung**
Bearing
Palier

(30) Priorität: 28.01.2010 DE 102010006262
(43) Veröffentlichungstag der Anmeldung: 10.08.2011
(73) Patentinhaber: BPW Bergische Achsen KG, 51674 Wiehl (DE)
(72) Erfinder: Dowe, Günter, 51588 Nümbrecht (DE); Kassner, Stephan, 51580 Reichshof (DE)
(74) Vertreter: Bungartz Christophersen Partnerschaft mbB Patentanwälte

(56) Entgegenhaltungen:
- DE-A1-102005 034 739

## Beschreibung

Die Erfindung betrifft die Lagerung eines Schwenkhebels gegenüber einem Druckstück nach dem Oberbegriff des Anspruchs 1.
Eine Lagerung mit diesen Merkmalen ist aus der DE 10 2005 034 739 A1 und aus der DE 10 2007 024 787 A1 bekannt. Sie besteht aus einer inneren und einer äußeren Lagerschale, deren kreisbogenförmig gekrümmte Wälzflächen einander radial unter Zwischenlage von Wälzkörpern gegenüber liegen. In Umfangsrichtung wird der zwischen den Lagerschalen angeordnete Wälzkörperraum durch radial in den Wälzkörperraum ragende Anschläge begrenzt, wobei einer dieser Anschläge an der äußeren, und der andere Anschlag an der inneren Lagerschale ausgebildet ist. Bei der Montage der Halbschalenlagerung sind Fehlmontagen durch falsches Ineinandersetzen der inneren in die äußere Lagerschale nicht ausgeschlossen. Beim Transport des Lagers, also noch vor dessen Montage am bestimmungsgemäßen Einsatzort, kann zu einem Auseinanderfallen des Lagers kommen, da keine Maßnahmen dagegen getroffen sind, dass sich innere und äußere Lagerschale voneinander lösen. Dies erfordert eine erhöhte Sorgfalt beim Transport des Lagers, ebenso wie während der Vorbereitung und der Durchführung der Montage am Einsatzort, z. B. der Zuspannung einer Kraftfahrzeugbremse. Erfolgt der Einbau der Lagerung nicht in korrekter Lage und Ausrichtung der beiden Lagerschalen, kann es zu einer Fehlfunktion oder einem Ausfall der Bremse mit entsprechend weitreichenden Folgen kommen.
Der Erfindung liegt die **Aufgabe** zugrunde, eine Lagerung der eingangs genannten Art so zu verbessern, dass eine Fehlmontage der Lagerung infolge falsch oder ungenau zueinander positionierter Lagereinzelteile vermieden wird.
Diese Aufgabe wird **gelöst** durch eine Lagerung mit den Merkmalen des Anspruchs 1.
Mit einer derart ausgebildeten Lagerung lassen sich Fehlmontagen der Lagerung infolge falsch oder ungenau zueinander positionierter Lagereinzelteile vermeiden. Indem die Lagerschalen zueinander verrastbar sind, lassen sich die Lagerschalen bereits vor dem Transport des Lagers zum Kunden ausreichend zueinander fixieren, so dass es während des Transports zu keiner Trennung der inneren von der äußeren Lagerschale kommen kann. Auch vor und während der Montage der Lagerung sind an eine sorgfältige Handhabung keine zu hohen Anforderungen gestellt. Denn es ist nicht erforderlich, beide Lagerschalen zugleich zu ergreifen, um ein unbeabsichtigtes Auseinanderfallen der Einzelteile des Lagers zu vermeiden. Denn ist dies erst einmal geschehen, besteht die Gefahr eines fehlerhaften erneuten Zusammensetzens, verbunden mit der Gefahr einer Fehlmontage. Wird aber ein falsch montiertes Lager z. B. in eine Fahrzeug-Scheibenbremse eingesetzt, kann es zu Fehlfunktionen oder sogar einem Ausfall der Bremse mit weitreichenden Folgen für die Sicherheit der Bremsfunktion kommen.

Die Verrastung der inneren mit der äußeren Lagerschale erfolgt in Umfangsrichtung, und vorzugsweise durch einen an der einen Lagerschale ausgebildeten Rastvorsprung, der in Umfangsrichtung außerhalb des Wälzkörperraums und im Abstand zu dem an der anderen Lagerschale ausgebildeten Anschlage angeordnet ist, wobei die Bewegungsbahnen des Rastvorsprungs und des Anschlags eine zumindest teilweise Überdeckung aufweisen. Diese Überdeckung ist vorzugsweise eine radiale Überdeckung.

Mit einer weiteren Ausgestaltung wird vorgeschlagen, dass der Rastvorsprung je nach Drehsinn unterschiedliche Flanken aufweist, wobei die dem Wälzkörperraum abgewandte Flanke flacher als die dem Wälzkörperraum zugewandte Flanke ist. Auf diese Weise ist zwar in die eine Drehrichtung mit geringem Kraftaufwand eine Verrastung möglich, hingegen erfolgt in die entgegengesetzte Drehrichtung eine Blockierung, die ein Auseinanderfallen des Lagers in die innere und die äußere Lagerschale verhindert.

Mit einer weiteren Ausgestaltung wird vorgeschlagen, dass der Wälzkörperraum zu seinen beiden Seiten hin durch an den Lagerschalen ausgebildete Seitenborde geschlossen ist. Vorzugsweise sind die Seitenborde radial zumindest teilweise überlappend gestaltet und in diesem Überlappungsbereich mit Strukturen versehen sind, die sich radial hintergreifen. Beispielsweise können die Strukturen des einen Seitenbordes Nasen sein, die zu dem anderen Seitenbord hin vorstehen und sich nur über einen Teilumfang der Lagerschale erstrecken.

Ein Ausführungsbeispiel der Erfindung wird im Folgenden anhand der Zeichnungen beschrieben. Darin zeigen
- Figur 1: in einer vereinfachten Schnittdarstellung eine Scheibenbremse einschließlich einer aus einem Schwenkhebel und einem Druckstück bestehenden Kraftübertragungseinrichtung mit einer dazwischen angeordneten Lagerung;
- Figur 2: einen Schnitt durch die Lagerung;
- Figur 3: einen weiteren Schnitt durch die Lagerung;
- Figur 4: einen weiteren Schnitt durch die Lagerung und
- Figur 5: eine perspektivische Detailansicht eines Schnitts durch die beiden Lagerschalen der Lagerung.

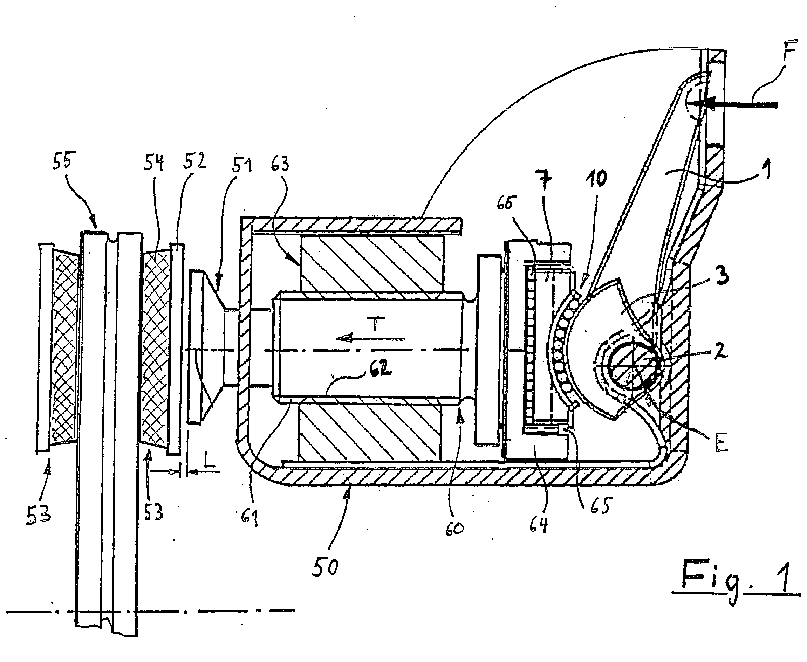

Die Figur 1 zeigt eine Fahrzeug-Scheibenbremse vom Schwimmsattel-Bautyp. In einem Bremsgehäuse 50 der Scheibenbremse sind zwei parallele Druckstempel 51 beweglich geführt. Bei Betätigung der Bremse legen sich die Druckstempel 51 nach Überwindung eines Lüftspiels L mit ihrer Stempelplatte gegen die Rückseite einer Belagplatte 52 eines inneren Bremsbelags 53 und drücken dessen Reibbelag 54 gegen die rotierende Bremsscheibe 55. Rückwärtig wird eine Abstützkraft über einen nicht dargestellten Bremssattel auf den äußeren Bremsbelag 53 übertragen. Durch die sich zwischen den Reibbelägen 54 und der Bremsscheibe 55 einstellende Reibkraft wird das Fahrzeug abgebremst.

Zum Ausgleich des sich im Laufe der Zeit einstellenden Bremsverschleißes ist die Scheibenbremse mit einer mechanisch arbeitenden Nachstelleinrichtung versehen. Diese befindet sich in einem mit einem Außengewinde 61 versehenen Nachstellelement 60. Das Außengewinde 61 greift in ein entsprechendes Innengewinde 62 einer Traverse 63. Die Traverse 63 ist als Joch gestaltet, das sich parallel zur Ebene der Bremsscheibe 55 erstreckt. Mittig in der Traverse 63 befindet sich das Innengewinde 62, wobei an den Enden der Traverse 63 jeweils ein Druckstempel 51 starr befestigt ist. Bei der dargestellten Scheibenbremse handelt es sich daher um eine Doppelstempel-Bremse.

Die zwischen der Bremsscheibe 55 und den Bremsbelägen 53 anliegende Reibkraft und damit die Verzögerung des Fahrzeugs ist abhängig von der Zuspannkraft, die von einem außerhalb des Bremsgehäuses 50 angeordneten Bremszylinder erzeugt wird. Zur Übertragung der von dem Bremszylinder, beispielsweise einem druckluftbetätigtem Bremszylinder erzeugten Zugspannkraft dient die im rechten Teil des Bremsgehäuses 50 dargestellte Kraftübertragungseinrichtung. Diese besteht aus einem schwenkbeweglichen Zuspannhebel 1 und einem im Bremsgehäuse 50 querbeweglichen Druckstück 7, die über ein schalenförmiges Lager 10 gegeneinander abgestützt sind.

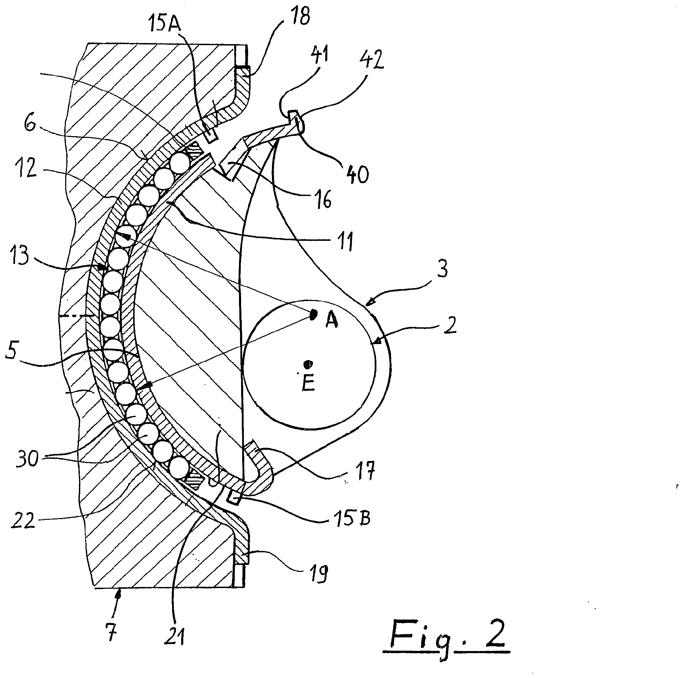

Am freien Ende des Zuspannhebels 1 stützt sich eine hier nur anhand der Kraft F symbolisierte Betätigungsstange des Bremszylinders ab. Im Bereich seines anderen Endes ist der Zuspannhebel 1 um eine gehäusefest angeordnete Achse E schwenkbar gegenüber dem Bremsgehäuse 50 abgestützt. Bei Betätigung des Bremszylinders bewegt sich dessen Betätigungsstange in Richtung der Kraft F, wodurch der Zuspannhebel 1 um die Achse E in Richtung zu der Bremsscheibe 55 hin schwenkt. Diese Schwenkbewegung des Zuspannhebels 1 führt, da der Drehmittelpunkt A (Fig. 2) des Schalenlagers 10 exzentrisch zu der Achse E liegt, über das Schalenlager 10 zu einem Vortreiben des Druckstücks 7. Zum Ausgleich der genannten Exzentrizität vermag das Druckstück 7 eine Querbewegung durchzuführen. Entsprechend dem Vortrieb des Druckstücks 7 und über die weiteren im Kraftfluss angeordneten Elemente werden dann die Bremsbeläge 53 gegen die Bremsscheibe 55 gepresst.

Beim Ausführungsbeispiel befinden sich außer dem Druckstück 7 ein weiteres Druckstück 64, das Nachstellelement 60, die Traverse 63 sowie die Druckstempel 51 im Kraftfluss. Bei dem Druckstück 7 der Kraftübertragungseinrichtung handelt es sich um ein Kulissenelement, das in einer Öffnung des weiteren Druckstücks 64 angeordnet ist. Innerhalb dieser Öffnung ist das Druckstück 7 über ein Flachlager 65 quer zur Richtung T bewegbar gelagert, um so die Exzentrizität zwischen der Drehachse E des Zuspannhebels 1 und dem geometrischen Kreismittelpunkt A (Fig. 2) der Lagerschalen des Lagers 10 auszugleichen.

Der Zuspannhebel 1 ist im Bereich seines drehbar gelagerten Endes als teilzylindrische Zuspannwelle 3 gestaltet, die auf einem Lagerbolzen 2 um die Achse E drehbar gelagert ist. Die Zuspannwelle 3 erstreckt sich symmetrisch zu beiden Seiten des Hebels des Zuspannhebels 1. Auf beiden Seiten des Hebels ist also jeweils ein schalenförmiges Lager 10 zur Gelenkverbindung mit dem Druckstück 7 vorgesehen.

Gemäß Fig. 2 ist der Zuspannhebel im Bereich seiner Zuspannwelle 3 zu dem Druckstück 7 hin mit einer teilzylindrischen, sich konvex nach außen wölbenden Fläche 5 versehen, die bezogen auf den mit A bezeichneten Punkt einen Radius aufweist. Das gegenüberliegend angeordnete Druckstück 7 weist eine entsprechend dimensionierte, konvexe Ausnehmung 6 mit ebenfalls einem Radius zu dem Punkt A auf. Zwischen den so gebildeten Flächen 5 der Zuspannwelle 3 und 6 des Druckstücks 7 ist die schalenförmige Lagerung 10 angeordnet.

Die geometrische Mittelachse A der konvexen Fläche 5 und der konkaven Fläche 6 und damit der Lagermittelpunkt der Schalenlagerung 10 ist gegenüber der Drehachse E des Zuspannhebels 1 versetzt, womit eine Exzentrizität zwischen den Achsen E und A besteht. Hierdurch kommt es beim Verschwenken des Zuspannhebels zu einer Vorverlagerung der Umfangsfläche 5 in Richtung zum Druckstück 7 und damit zu dem gewünschten Vorschub des Druckstücks 7 in Richtung zur Bremsscheibe. Die Größe dieses Vorschubs hängt von dem Achsenversatz, d.h. der Exzentrizität zwischen den Achsen E und A ab.
Für die mit der Erfindung erzielten Montagevorteile ist die Detailgestaltung des Schalenlagers wesentlich, was nachfolgend unter Bezugnahme auf die Figuren 2 bis 5 erläutert wird.
Das Lager 10 ist zusammengesetzt aus einer inneren gebogenen Lagerschale 11 und einer äußeren gebogenen Lagerschale 12, die Lagerflächen 21, 22 aufweisen, auf denen die Wälzkörper 30 der Wälzlagerung abrollen. Im Bereich zwischen den Lagerflächen 21, 22 befindet sich der gekrümmte Lagerraum 13 zur Unterbringung der Wälzkörper 30. Die Lagerschalen 11, 12 sind seitlich der Lagerflächen 21, 22 um ca. 90° aufeinander zu abgewinkelt, wodurch Seitenborde 31, 32 entstehen, die sich radial zum Teil überdecken.
Die innere Lagerschale 11 ist insgesamt breiter als die äußere Lagerschale 12, so dass auf beiden Seiten der Lagerflächen 21, 22 das Seitenbord 31 der inneren Lagerschale 11 das Seitenbord 32 der äußeren Lagerschale 12 außen überlappt bzw. überdeckt. Durch diesen Überlapp der Seitenborde 31, 32 wird der Innenraum zur Seite hin nach Art einer Labyrinthdichtung vor Verunreinigungen, etwa Staub, Sand, Spritzwasser usw., abgedichtet.
Die innere Lagerschale 11 ist durch einstückig daran ausgebildete Halteelemente 16 und 17 formschlüssig auf der Welle 3 festgelegt.
Bei den Halteelementen 16, 17 handelt es sich um ein durch Abwinkeln oder Biegen hergestelltes Element 17 im unteren Bereich der Zuspannwelle 3 sowie ein durch Stanzen und anschließendes Biegen hergestelltes Element 16 im oberen Bereich der Zuspannwelle 3. Die Festlegung des inneren Lagerelements 11 erfolgt dabei so, dass zunächst das federnd gestaltete Element 17 mit der Zuspannwelle 3 in Eingriff gebracht wird und dann das Element 16 auf der gegenüberliegenden Seite der Zuspannwelle 3 verrastet wird. Auf diese Weise ist das Wälzlager mit wenigen Handgriffen an dem Zuspannhebel 1 bzw. auf dessen Zuspannwelle 3 in Umfangsrichtung montierbar.
Die äußere Lagerschale 12 liegt in einer muldenförmigen Ausnehmung des Druckstücks 7. Darin liegt die äußere Lagerschale 12 lose an, d. h. die mechanische Festlegung des Lagers 10 erfolgt nur über die innere Lagerschale 11 an der Zuspannwelle 3. Die äußere Lagerschale 12 kann allerdings durch nach außen abgewinkelte Elemente 18, 19 gegen ein Wandern in Umfangsrichtung, d. h. um den Drehmittelpunkt A, gesichert sein. Die Elemente 18, 19 können Laschen sein, die in Umfangsrichtung einstückig an der Lagerschale 12 durch z.B. Stanzen und/oder Biegen angeformt sind.

Zwischen den Lagerflächen 21, 22 der Lagerschalen 11 und 12 befindet sich der Lagerraum 13, in dem die Wälzkörper 30 in einem Lagerkäfig untergebracht sind. In Umfangsrichtung begrenzt wird der Wälzlagerraum 13 von einem an der äußeren Lagerschale 12 angeformten Anschlag 15A sowie einem an der inneren Lagerschale 11 angeformten Anschlag 15B, zwischen denen der Lagerkäfig in beide Richtungen gegen Herausrutschen gesichert ist.

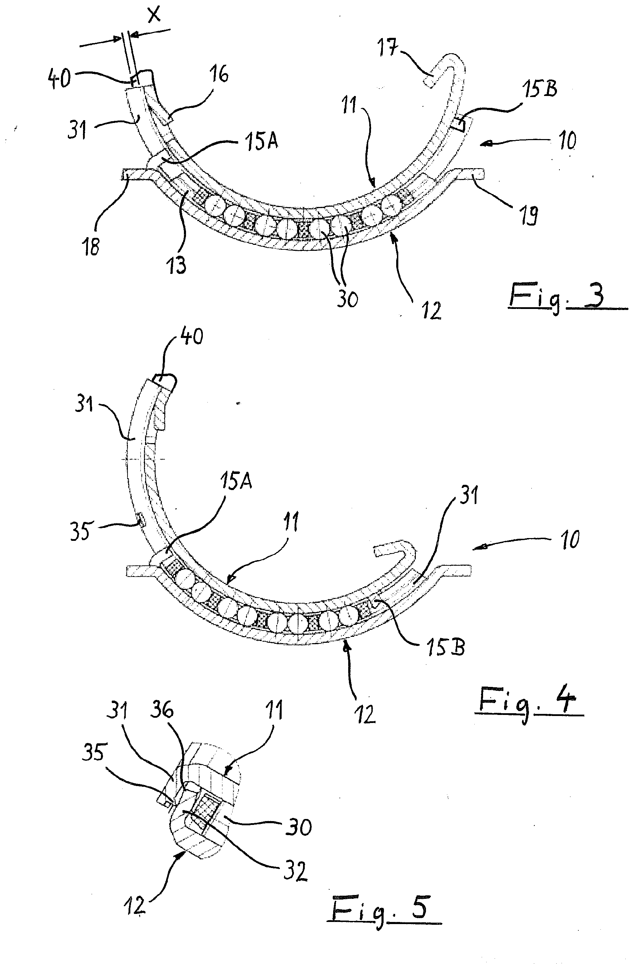

Gemäß Fig. 5 sind die Seitenborde 31 der inneren Lagerschale 11 weiter voneinander beabstandet als die Seitenborde 32 der äußeren Lagerschale 12, so dass die Ränder 31 seitlich einen Umgriff um die Ränder 32 der äußeren Lagerschale 12 bilden. Durch diesen Umgriff wird der Lagerinnenraum nach Art einer Labyrinthdichtung von äußeren Verunreinigungen, etwa Staub oder Ähnlichem, abgeschirmt.

Um zu ermöglichen, die Lagerschalen 11, 12 in radialer Richtung gegeneinander zu verrasten und so gegen ein Auseinanderfallen zu sichern, ist das Seitenbord 31 an seiner Innenseite mit Strukturen in Gestalt von Nasen 35 versehen. Jedes Seitenbord 31 kann, in Umfangsrichtung betrachtet, zwei solche Nasen 35 aufweisen, so dass, legt man beide Seitenborde 31 der inneren Lagerschale 11 zugrunde, insgesamt vier Nasen 35 vorhanden sind.

Gemäß Fig. 5 bewirken die Nasen 35 des einen Seitenbordes 31 eine Art Hintergriff gegenüber dem jeweils anderen Seitenbord 32. Zur Realisierung dieses Hintergriffs sind beide Seitenborde 32 zu ihrem Ende hin nach außen gebogen. Der Hintergriff ist realisiert, da die äußeren Kanten der Biegungen 36 des Seitenbords 32 zueinander eine größere Breite aufweisen, als die Spitzen der Nasen 35.

Durch die Gestaltung der beteiligten Strukturen, d. h. der Nasen 35 an den beiden Seitenborden 31 und der Biegungen 36 an den beiden anderen Seitenborden 32, lassen sich die beiden Lagerschalen 11, 12 radial miteinander verrasten. Hierzu wird zunächst der Wälzlagerkäfig mit den Wälzkörpern 30 in die Lagerschale 12 eingesetzt, und dann die andere Lagerschale 11 von innen her angesetzt. Bei entsprechendem radialen Druck kommt es zu einer Verformung des Materials, bis die Nasen 35 hinter die Biegungen 36 gelangen. Die Lagerbestandteile lassen sich dann nur durch einen bewussten Kraftaufwand wieder voneinander lösen.

Zusätzlich oder alternativ zur radialen Verrastung lassen sich die Lagerschalen 11, 12 in Umfangsrichtung miteinander verrasten. Hierzu befindet sich am einen Ende der inneren Lagerschale 11 mindestens ein Rastvorsprung 40. Dieser ist als Lasche an der Lagerfläche 21 oder an den beiden Seitenborden 31 der Lagerschale 11 einstückig angeformt. Der Rastvorsprung 40 ist, in Umfangsrichtung und damit in Drehrichtung betrachtet, im Abstand zu dem an der anderen, also der äußeren Lagerschale 12 angeformten Anschlag 15A angeordnet. In Fig. 3 ist wiedergegeben, dass, sobald die innere Lagerschale 11 und die äußere Lagerschale 12 zueinander verdreht werden, die sich hierbei ergebenden Bewegungsbahnen des Rastvorsprungs 40 und des Anschlags 15A eine teilweise Überdeckung X aufweisen. Die Überdeckung X ist hier radial, sie kann jedoch auch axial sein.

Der Vorsprung 40, bei dem es sich vorzugsweise um eine am äußersten Ende der inneren Lagerschale 11 angeformte Lasche oder mehrere solcher Laschen handelt, weist je nach Drehsinn unterschiedlich gestaltete Flanken 41, 42 auf. Die dem Wälzkörperraum 13 abgewandte Flanke 42 ist als eine Schräge gestaltet und daher flacher gestaltet, als die dem Wälzkörperraum 13 zugewandte andere Flanke 41, welche im Wesentlichen radial verläuft.

Beim Wälzlagerhersteller erfolgt vor der Auslieferung an den Kunden, z.B. einen Bremsenhersteller, die Montage des in Umfangsrichtung verrastbaren Lagers 10, indem zunächst die von dem Lagerkäfig zusammen gehaltenen Wälzkörper 30 außen auf die innere Lagerschale 11 aufgesetzt werden. Sodann wird die Lagerschale 11 einschließlich der Wälzkörper in Fig. 3 im Uhrzeigersinn in die äußere Lagerschale 12 hineingedreht, bis der Rastvorsprung 40 gegen den Anschlag 15A der Lagerschale 12 stößt. Das Hineindrehen der inneren in die äußere Lagerschale findet hierdurch zunächst ein Ende. Allerdings lässt sich durch einen dann erhöhten Druck in Umfangsrichtung erreichen, dass es zu einer nicht dauerhaften Verformung des Materials der Lagerschalen um den Betrag X kommt, wodurch Rastvorsprung 40 und Anschlag 15A aneinander vorbeigelangen, indem eines dieser beiden Elemente oder auch beide Elemente etwas zurückweichen. Ist die so definierte Raststellung überwunden, befindet sich anschließend der Rastvorsprung 40, wie in den Figuren 2 bis 4 wiedergegeben, hinter dem Anschlag 15A. Dies ist die gewünschte Position, in der das Lager 10 dann für die Verpackung und den Transport zum Kunden bereitgestellt wird.

Ein Zurückdrehen der inneren Lagerschale 11 entgegen dem Uhrzeigersinn ist anschließend nicht mehr ohne weiteres möglich, da in diesem Fall die steile Flanke 41 gegen den Anschlag 15A stößt und ein Weiterdrehen blockiert.

### Bezugszeichen

- 1: Zuspannhebel
- 2: Lagerbolzen
- 3: Zuspannwelle
- 5: Fläche, Umfangsfläche
- 6: Fläche, Mulde
- 7: Druckstück
- 10: Lagerung
- 11: Lagerschale
- 12: Lagerschale
- 13: Wälzkörperraum
- 15A: Anschlag
- 15B: Anschlag
- 16: Montageelement
- 17: Montageelement
- 18: Element
- 19: Element
- 21: Lagerfläche
- 22: Lagerfläche
- 30: Wälzkörper
- 31: Seitenbord
- 32: Seitenbord
- 35: Nase
- 36: Biegung
- 40: Vorsprung
- 41: Flanke
- 42: Flanke

- 50: Bremsgehäuse
- 51: Druckstempel
- 52: Belagplatte
- 53: Bremsbelag
- 54: Reibbelag
- 55: Bremsscheibe
- 60: Nachstellelement
- 61: Außengewinde
- 62: Innengewinde
- 63: Traverse
- 64: Druckstück
- 65: Flachlager

- A: Achse
- E: Achse
- F: Kraft
- L: Lüftspiel
- T: Translation
- X: Überdeckung

## Patentansprüche

1. Lagerung eines Schwenkhebels (1) gegenüber einem Druckstück (7), mit einer inneren (11) und einer äußeren (12) Lagerschale, deren kreisbogenförmig gekrümmte Wälzflächen (21, 22) einander radial unter Zwischenlage von Wälzkörpern (30) gegenüberliegen, wobei der zwischen den Lagerschalen (11, 12) angeordnete Wälzkörperraum (13) in Umfangsrichtung durch radial in den Wälzkörperraum (30) ragende Anschläge (15A, 15B) begrenzt ist, wobei ein Anschlag (15A) an der äußeren (12), und ein Anschlag (15B) an der inneren (11) Lagerschale ausgebildet ist, und wobei die Lagerschalen (11, 12) miteinander verrastbar sind,
**dadurch gekennzeichnet, dass** die Lagerschalen (11, 12) in Umfangsrichtung miteinander verrastbar sind.

2. Lagerung nach Anspruch 1, **gekennzeichnet durch** einen an der einen Lagerschale ausgebildeten Rastvorsprung (40), der in Umfangsrichtung außerhalb des Wälzkörperraums (13) und im Abstand zu dem an der anderen Lagerschale ausgebildeten Anschlag (15A) angeordnet ist, wobei die Bewegungsbahnen des Rastvorsprungs (40) und des Anschlags (15A) eine zumindest teilweise Überdeckung (X) aufweisen.

3. Lagerung nach Anspruch 2, **dadurch gekennzeichnet, dass** die Überdeckung (X) eine radiale Überdeckung ist.

4. Lagerung nach Anspruch 2 oder 3, **dadurch gekennzeichnet, dass** der Rastvorsprung (40) je nach Drehsinn unterschiedliche Flanken aufweist, wobei die dem Wälzkörperraum (13) abgewandte Flanke (42) flacher als die dem Wälzkörperraum (13) zugewandte Flanke (41) ist.

5. Lagerung nach einem der Ansprüche 1 bis 4, **dadurch gekennzeichnet, dass** der Wälzkörperraum (13) zu seinen beiden Seiten hin durch an den Lagerschalen (11, 12) ausgebildete Seitenborde (31, 32) geschlossen ist.

6. Lagerung nach Anspruch 5, **dadurch gekennzeichnet, dass** sich die Seitenborde (31, 32) radial zumindest teilweise überlappen und in diesem Überlappungsbereich mit Strukturen (35, 36) versehen sind, die sich radial hintergreifen.

7. Lagerung nach Anspruch 6, **dadurch gekennzeichnet, dass** die Strukturen des einen Seitenbordes Nasen (35) sind, die zu dem anderen Seitenbord hin vorstehen und sich nur über einen Teilumfang der Lagerschale erstrecken.

8. Lagerung nach einem der vorangehenden Ansprüche, **dadurch gekennzeichnet, dass** die Lagerschalen (11, 12) im Bereich der Enden ihrer Wälzflächen (21, 22) mit die Lagerschalen in Umfangsrichtung gegenüber dem Schwenkhebel (1) bzw. dem Druckstück (7) festlegenden Verformungen (16, 17; 18, 19) versehen sind.

## Claims

1. Bearing of a pivoting lever (1) with respect to a pressure piece (7) having an inner bearing shell (11) and an outer bearing shell (12), the circularly arcuately curved rolling faces (21, 22) of which lie radially opposite one another with the interposition of rolling bodies (30), the rolling body space (13) which is arranged between the bearing shells (11, 12) being delimited in the circumferential direction by way of stops (15A, 15B) which protrude radially into the rolling body space (30), a stop (15A) being configured on the outer bearing shell (12), and a stop (15B) being configured on the inner bearing shell (11), and it being possible for the bearing shells (11, 12) to be latched to one another, **characterized in that** the bearing shells (11, 12) can be latched to one another in the circumferential direction.

2. Bearing according to Claim 1, **characterized by** a latching projection (40) which is configured on the one bearing shell and is arranged in the circumferential direction outside the rolling body space (13) and at a spacing from the stop (15A) which is configured on the other bearing shell, the movement paths of the latching projection (40) and the stop (15A) having an at least partial overlap (X).

3. Bearing according to Claim 2, **characterized in that** the overlap (X) is a radial overlap.

4. Bearing according to Claim 2 or 3, **characterized in that** the latching projection (40) has different flanks depending on the rotational direction, the flank (42) which faces away from the rolling body space (13) being flatter than the flank (41) which faces the rolling body space (13).

5. Bearing according to one of Claims 1 to 4, **characterized in that** the rolling body space (13) is closed towards its two sides by way of side rims (31, 32) which are configured on the bearing shells (11, 12) .

6. Bearing according to Claim 5, **characterized in that** the side rims (31, 32) overlap radially at least partially and, in the said overlap region, are provided with structures (35, 36) which engage radially behind one another.

7. Bearing according to Claim 6, **characterized in that** the structures of the one side rim are lugs (35) which project towards the other side rim and extend only over a part circumference of the bearing shell.

8. Bearing according to one of the preceding claims, **characterized in that** the bearing shells (11, 12) are provided in the region of the ends of their rolling faces (21, 22) with deformations (16, 17; 18, 19) which fix the bearing shells in the circumferential direction with respect to the pivoting lever (1) or the pressure piece (7).

## Revendications

1. Support sur palier d'un levier pivotant (1) par rapport à une pièce de pression (7), comprenant une coque de palier intérieure (11) et une coque de palier extérieure (12), dont les surfaces de roulement de courbure en forme d'arc de cercle (21, 22) sont opposées l'une à l'autre radialement en interposant des corps de roulement (30), l'espace pour les corps de roulement (13) disposés entre les coques de palier (11, 12) étant limité dans la direction périphérique par des butées (15A, 15B) s'étendant radialement dans l'espace pour les corps de roulement (30), une butée (15A) étant réalisée sur la coque de palier extérieure (12) et une butée (15B) étant réalisée sur la coque de palier intérieure (11), et les coques de palier (11, 12) pouvant être encliquetées l'une dans l'autre,
**caractérisé en ce que** les coques de palier (11, 12) peuvent être encliquetées l'une dans l'autre dans la direction périphérique.

2. Support sur palier selon la revendication 1,
**caractérisé par** une saillie d'encliquetage (40) réalisée au niveau de l'une des coques de palier, laquelle est disposée dans la direction périphérique à l'extérieur de l'espace pour les corps de roulement (13) et à distance de la butée (15A) réalisée au niveau de l'autre coque de palier, les trajectoires de déplacement de la saillie d'encliquetage (40) et de la butée (15A) présentant un recouvrement au moins partiel (X).

3. Support sur palier selon la revendication 2,
**caractérisé en ce que** le recouvrement (X) est un recouvrement radial.

4. Support sur palier selon la revendication 2 ou 3,
**caractérisé en ce que** la saillie d'encliquetage (40) présente des flancs différents en fonction du sens de rotation, le flanc (42) opposé à l'espace pour les corps de roulement (13) étant plus plats que le flanc (41) tourné vers l'espace pour les corps de roulement (13).

5. Support sur palier selon l'une quelconque des revendications 1 à 4, **caractérisé en ce que** l'espace pour les corps de roulement (13) est fermé vers ses deux côtés par des bords latéraux (31, 32) réalisés au niveau des coques de palier (11, 12).

6. Support sur palier selon la revendication 5,
**caractérisé en ce que** les bords latéraux (31, 32) se chevauchent au moins en partie radialement et sont pourvus dans cette région de chevauchement de structures (35, 36) qui viennent en prise radialement par l'arrière.

7. Support sur palier selon la revendication 6,
**caractérisé en ce que** les structures de l'un des bords latéraux sont des ergots (35) qui font saillie vers l'autre bord latéral et qui s'étendent seulement sur une périphérie partielle de la coque de palier.

8. Support sur palier selon l'une quelconque des revendications précédentes, **caractérisé en ce que** les coques de palier (11, 12), dans la région des extrémités de leurs surfaces de roulement (21, 22) sont pourvues de formations (16, 17 ; 18, 19) fixant les coques de palier dans la direction périphérique par rapport au levier pivotant (1) ou à la pièce de pression (7).
